# EUROPEAN PATENT SPECIFICATION

(11) **EP 3 635 684 B1**
(45) Date of publication and mention of the grant of the patent: **16.06.2021**
(21) Application number: 18727793.4
(22) Date of filing: 29.05.2018
(51) Int. Cl.: G06T 7/246, G06T 7/269

(54) **PYRAMIDAL OPTICAL FLOW TRACKER IMPROVEMENT**
VERBESSERUNG EINES PYRAMIDENFÖRMIGEN OPTISCHEN FLUSSVERFOLGERS
AMÉLIORATION D'UN SUIVEUR DE FLUX OPTIQUE PYRAMIDAL

(30) Priority: 06.06.2017 DE 102017112333
(43) Date of publication of application: 15.04.2020
(73) Proprietor: Connaught Electronics Ltd., Tuam, County Galway (IE)
(72) Inventor: CHANDRA, Sunil, Tuam County Galway (IE); YOGAMANI, Senthil Kumar, Tuam County Galway (IE); HUGHES, Ciaran, Tuam County Galway (IE); HORGAN, Jonathan, Tuam County Galway (IE); LENK, Matthias, 09366 Stollberg (DE)
(74) Representative: Jauregui Urbahn, Kristian
(86) International application number: PCT/EP2018/064032
(87) International publication number: WO 2018/224355

(56) References cited:
- US-A1- 2012 301 051
- US-A1- 2014 023 279
- VARFOLOMIEIEV A ET AL: "An improved algorithmofmedian flow for visual object tracking and its implementation on TI OMAP", EDUCATION AND RESEARCH CONFERENCE (EDERC), 2012 5TH EUROPEAN DSP, IEEE, 13 September 2012 (2012-09-13), pages 261-265, XP032777765, DOI: 10.1109/EDERC.2012.6532268 ISBN: 978-1-4673-4595-8 [retrieved on 2013-06-13]
- SUN DEQING ET AL: "A Quantitative Analysis of Current Practices in Optical Flow Estimation and the Principles Behind Them", INTERNATIONAL JOURNAL OF COMPUTER VISION, KLUWER ACADEMIC PUBLISHERS, NORWELL, US, vol. 106, no. 2, 3 September 2013 (2013-09-03), pages 115-137, XP035362705, ISSN: 0920-5691, DOI: 10.1007/S11263-013-0644-X [retrieved on 2013-09-03]

## Description

The present invention refers to a method for performing optical flow estimation, as defined in claim 1.

The present invention also refers to a driving assistance system comprising a camera and a processing device, whereby the camera provides subsequent frames and the processing device is adapted to perform the above method using the frames provided from the camera.

Furthermore, the present invention refers to a vehicle comprising an above driving assistance system.

Optical flow trackers are known in the Art. E.g., the Lucas Kanade tracker is a commonly used method for optical flow tracking, in particular for tracking sparse feature points. The Lucas Kanade (LK) tracker is used in many different applications for optical flow estimation. It assumes that the flow is essentially constant in a local neighborhood of a pixel under consideration, and solves basic optical flow equations for all pixels in that neighborhood by the least squares criterion. The Lucas Kanade method further assumes that the displacement of the image contents between two nearby frames is small and approximately constant within a neighborhood of a point under consideration. Thus, the optical flow equation can be assumed to hold for all pixels within a window centered at this point under consideration. One of the advantages of the Lucas-Kanade method is its relative robustness against noise and small image defects. However, also other methods for optical flow estimation are known in the Art, e.g. Compositional Image Alignment.

Such optical flow trackers can be implemented using a pyramidal image structure. The images refers to representations of a frame captured by a camera with different resolutions. Hence, the different representations of the frame are arranged in different pyramid layers, whereby the first layer is an upper layer in the pyramid. When moving from a layer to a subsequent lower layer, a representation of the frame with an increased resolution is considered in the lower layer compared to the upper layer. Hence, the feature tracking can become robust also for bigger displacements of features, and gains efficiency.

In general, in all of the applications, the number of pyramid layers depends upon the application. The number of pyramid layers is fix for each application.

In this context, document US 2005/0169529 A1 refers to an active learning system for fingerprinting an object identified in an image frame. The active learning system comprises a flow-based object segmentation module for segmenting a potential object candidate from a video sequence, a fixed-basis function decomposition module using Haar wavelets to extract a relevant feature set from the potential object candidate, a static classifier for initial classification of the potential object candidate, an incremental learning module for predicting a general class of the potential object candidate, an oriented localized filter module to extract features from the potential object candidate, and a learning-feature graph-fingerprinting module configured to receive the features and build a fingerprint of the object for tracking the object.

The article "An improved algorithm of median flow for visual object tracking and its implementation on TI OMAP", by A. Varfolomieiev, discloses a pyramidal feature tracking method where the number of pyramid layers is adaptively determined based on the apparent size of the tracked object which can be dynamically determined.

It is an object of the present invention to provide a method for performing optical flow estimation, a driving assistance system as discussed above, and a vehicle as specified above, which enable a further increased image tracking using a pyramidal approach, which can be performed efficiently, which achieve reliable feature tracking, and which can be performed with low computational power.

This object is achieved by the independent claims. Advantageous embodiments are given in the dependent claims.

In particular, the present invention provides a method for performing optical flow estimation, as defined in claim 1.

The present invention also provides a driving assistance system comprising a camera and a processing device, whereby the camera provides subsequent frames and the processing device is adapted to perform the above method using the frames provided from the camera.

The present invention further provides a vehicle comprising an above driving assistance system.

The basic idea of the invention is a dynamic model adaptation of the pyramidal implementation of the optical flow tracker, which exploiting a tradeoff between accuracy of the model and run time computational requirements. Hence, depending on a current situation, it can be sufficient to calculate the image pyramid with a higher or lower number of layers. The method is applicable for both a sparse and a dense optical flow.

Some examples, where such a dynamic model adaptation of the pyramidal implementation can be applied, include e.g. when a size of a detected object is smaller than a displacement. For a fix number of pyramid layers, which are set for larger displacements, this object will slowly disappear and will be finally forgotten. Hence, the number of pyramid levels can be reduced. This reduction can be done adaptively. This adaption will improve the accuracy and run-time requirements of the feature tracking algorithm.

The calculation of the optical flow is preferably performed using a Lucas Kanade feature tracker. However, also other known algorithms for feature tracking in optical images can be used.

The frames refer to optical images as provided by the camera. The images can in general be provided in any suitable format, resolution and number of pixels. They can be provide in multicolor, greyscale, or in black and white.

The image pyramid comprises different representations of a frame as captured by the camera. The different representations of the frame are arranged in different layers, whereby the first layer is an upper layer in the pyramid. When moving from one layer to a subsequent lower layer, a representation of the frame with an increased resolution is considered. Hence, the number of pixels of the image is increased every time when stepping down to a lower layer of the pyramid. Preferably, a warp step is performed when changing to a lower pyramid layer. Warp refers to reduction of frame movement between subsequent frames, which facilitates feature tracking and calculation of optical flow.

Different algorithms are known to perform a detection of features in a frame. Feature detection typically refers to a detection of good points, which can be well tracked. In particular, the detected features refer to corners or other high textured points. The features can be captured e.g. using algorithms like Harris or FAST (link).

Feature detection can further include performing a selection of a subset of features out of the recognized features. Hence, such a subset of features can be picked in order to make feature tracking more robust. Preferably, "good" features, which have a high confidence for being a feature, are selected, preferably using a Harris Score. Furthermore, by reducing the number of features to be processed, a performance when executing the method can be improved. In this respect, features are preferably evaluated using the saliency score to reduce a computational time for processing.

The driving assistance system refers to any possible driving assistance system using optical flow information. The camera can be any suitable type of camera, which can be mounted at any location of the vehicle. The processing device can be any type of processing device for processing digital information, e.g. a control unit. The processing device can be shared by different systems of the vehicle.

According to the invention, the step of performing a dynamic adaption of a number of pyramid layers of the image pyramid comprises performing a dynamic adaption of the number of pyramid layers based on a movement speed of a camera, which generates the frames. The movement speed gives a good indication in respect to a possible relative movement between a feature and the vehicle, to which the camera is attached. Movement speed of the camera relative to a feature has a direct impact on a possible length of optical flow vectors. Since features within the frame are expected to move with the velocity indicated by a length of the individual optical flow of the features, this provides a reliable means for determining a need to provide a certain number of pyramid layers. The faster a feature moves relative to the camera, the more pyramid layers are required. In other words, in case of a large displacement of a feature, the number of pyramid layers increases, whereas for a small displacement, the number of pyramid layers decreases. A larger number of pyramid layers increase the chances that a good track of a feature will be found for larger displacements in a scene covered by a frame. This adaption will improve the accuracy and run-time requirements of the feature tracking algorithm. Furthermore, a manual configuration of a number of pyramid layers can be omitted.

According to a modified embodiment of the invention, the method comprises a step of determining the movement speed of the camera based on odometry information and/or using camera-based movement speed detection. Odometry information refers to information gathered by the vehicle in respect to its movement, including wheel movement, steering angle, or others. Different types of sensors can be provided at the vehicle to provide redundant odometry information, or a single odometry information can be determined based on different inputs from the different sensor types. A camera-based motion detection can be performed by comparison of a sequence of frames, whereby a displacement of an entire scene or parts thereof indicates a movement of the vehicle.

According to a modified embodiment of the invention, step of determining the movement speed of the camera comprises determining a movement speed for up to six individual movements of the camera. Hence, when the vehicle moves in any of the six individual movement, also the camera moves with the vehicle. The six movements of the camera refer to a displacement in any coordinate axis and a rotation around any coordinate axis, resulting overall in a number of six degrees of freedom for movement.

According to a modified embodiment of the invention, the step of performing a dynamic adaption of a number of pyramid layers of the image pyramid comprises performing a dynamic adaption of the number of pyramid layers based on a position and/or a view direction of the of a camera, which generates the frames, in particular in respect to a preferred movement direction of a vehicle, to which the camera is attached. When considering a movement of a vehicle, this movement is typically a lineal movement. At least for a limited distance, such an approximation of the movement of the vehicle is justified. Based on this movement of the vehicle, optical flow is different for different positions and view directions of cameras mounted on the vehicle due to the different constraints on the expected optical flow. For example, optical flow will be different for a front view camera compared to a mirror left view camera, in particular when the vehicle moves straight ahead. This adaption will improve the accuracy and run-time performance of the optical flow feature tracker.

According to a modified embodiment of the invention, the step of performing a dynamic adaption of a number of pyramid layers of the image pyramid comprises performing a dynamic adaption of the number of pyramid layers based on a distance of features from a camera, which generates the frames. If an object, on which a feature is defined, is close to the vehicle, or the object is larger than the displacement, the number of pyramid layers should be increase adaptively.

According to a modified embodiment of the invention, the step of performing a dynamic adaption of a number of pyramid layers of the image pyramid is performed with a minimum rate of a given number of frames, preferably at least every twenty frames, further preferred at least every ten frames, still further preferred at least every five frames, and even further preferred every frame. A frequency of the adaptation of the number of pyramid layers can be chosen to provide an efficient implementation. The frequency can be adapted e.g. based on a movement speed of the camera and/or a frame rate of the camera. The higher the movement speed and the lower the frame rate, the bigger the length of the optical flow vectors.

According to a modified embodiment of the invention, the step of providing an image pyramid with representations of different resolution images of the previous frame and a current frame comprises generating a pyramid with asymmetric down-sampling with a higher resolution in a horizontal direction than in a vertical direction. The pyramid levels are typically provided with symmetric pyramid levels during down-sampling. However, in general, the input frame is not a square, i.e. it does not have a 1:1 aspect ratio. Furthermore, in case of automotive motion and camera mounting, either forward or backward directions, there is typically more flow in the image in the horizontal direction than vertical direction of the image. This depends on a mechanical positioning of the camera at the vehicle together with a typical movement of the vehicle. This is not to say that the optical flow only has a component in the horizontal direction, optical flow is merely predominant in the horizontal direction, as objects tend to move on the ground plane, i.e. in the horizontal direction. Therefore, accuracy in the horizontal direction is more important than in the vertical direction. Even in the case of diagonal flow, it tends to have a bigger component in the horizontal direction than in the vertical direction. Hence, instead of doing symmetric down-sampling, providing a higher resolution in the horizontal direction than in the vertical direction corresponds to the frequent needs of vision, in particular in automotive applications.

According to a modified embodiment of the invention, the method comprises an additional step of modeling a pyramid predication prior to the step of providing an image pyramid with representations of different resolutions images of the previous frame and a current frame. The model is based on a behavior of the object, which can be closer to the camera, further away from camera, a displacement of the object, a size of the object, a motion of either object or vehicle or both, and others, based on which the number of pyramid layers can vary. For the model, in each of the cases, a status of the states is independent from previous situations. Accordingly, also next possible situations are independent. In all such a real scenario, a predication model is preferred, which is independent from past or future states. The model should be dependent on the current states only, which is preferably achieved with a probabilistic model.

According to a modified embodiment of the invention, the step of modeling a pyramid predication comprises combining a global model for the entire frame and a local model for at least one cluster of similar motion. For complex scenes, a global model is not sufficient, since it has to deal with has various depths and other fast moving objects like vehicles in moving in an opposite direction compared to an own vehicle. These problems can be overcome by incorporating a local model as well. This is preferably achieved by clustering the flow vectors into regions of similar motion, which provides a variable adaptation parameter for each region. Both parameters are preferably fused by using a Markov model to form a temporally consistent adaptation of the number of pyramid layers.

According to a modified embodiment of the invention, the step of modeling a pyramid predication comprises using a Markov random model. The Markov model is a stochastic model used to model randomly changing systems where it is assumed that future states depend only on current states, and not on previous events.

According to a modified embodiment of the invention, the step of providing an image pyramid with representations of different resolutions images of the previous frame and a current frame comprises interpolating features detected in a coarse pyramid layer to a lower pyramid layer with a higher resolution. When moving from coarse to fine levels of the image pyramid, instead of re-computing features over down-sampled image, interpolating the features detected in coarse level to next finer levels has proven highly efficient. This increases the accuracy and decreases computational effort. Interpolation is especially beneficial in case of using dense optical flow. In case of dense flow, information about each or almost each pixel in the frame is provided, which makes processing of features time consuming. The interpolation can help to reduce the computational effort.

According to a modified embodiment of the invention, the step of interpolating features detected in a coarse pyramid layer to a lower pyramid layer with a higher resolution comprises using bilinear interpolations.

These and other aspects of the invention will be apparent from and elucidated with reference to the embodiments described hereinafter.

In the drawings:
- Fig. 1: shows a schematic view of a vehicle with a driving assistant system comprising a front, a rear, and a lateral mirror camera according to a first, preferred embodiment in a lateral view,
- Fig. 2: shows a flow chart of a method for performing optical flow estimation according to the first embodiment using the vehicle and the driving assistance system shown in Fig. 1,
- Fig. 3: shows a block diagram indicating a feature tracking pipeline in accordance with the method of the first embodiment,
- Fig. 4: shows a block diagram indicating a dynamic model adaptation of a pyramid model used for the optical flow estimation according to Fig. 2,
- Fig. 5: shows a diagram indicating a Gaussian pyramid model of a current and a previous frame in accordance with the method of Fig. 2,
- Fig. 6: shows a view of different representations of a frame in accordance with the Gaussian pyramid model of Fig. 5,
- Fig. 7: shows a view of a representation of a frame in accordance with the Gaussian pyramid model of Fig. 5 with marked cluster of similar motion,
- Fig. 8: shows a view of a representations of a frame with odometry output and a resulting camera movement, and
- Fig. 9: shows a flow chart of a generic optical flow algorithm according to a second embodiment.

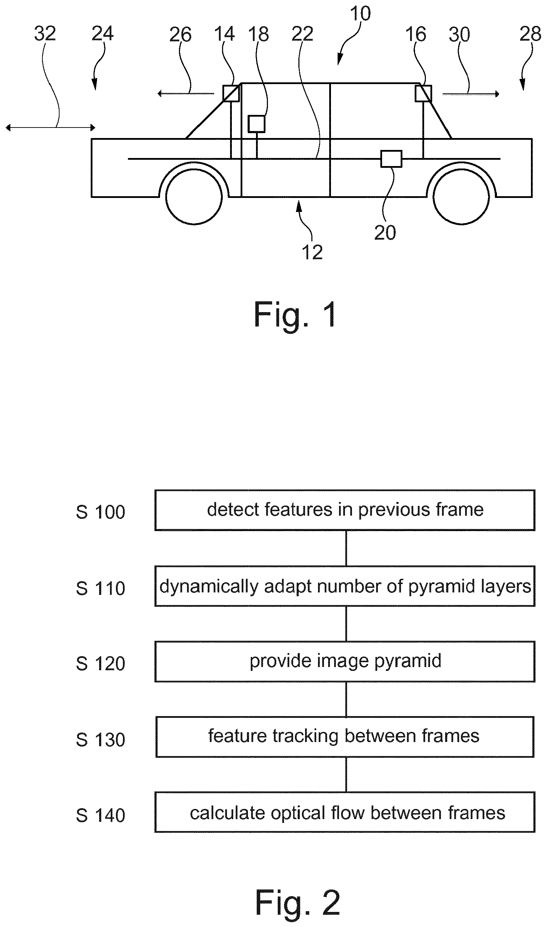

Figure 1 shows a vehicle 10 with a driving assistant system 12 according to a first, preferred embodiment.

The driving assistant system 12 comprises a set of cameras 14, 16, 18 including a front camera 14, a rear camera 16, and a laterally attached mirror camera 18. The front camera 14 is provided facing a front 24 of the vehicle 10 with a frontal view direction 26, the rear camera 16 provided facing a rear 28 of the vehicle 10 with a rear view direction 30, and the mirror camera 18 is provided at a lateral side of the vehicle 10 with a lateral view direction.

The driving assistance system 12 refers to any possible driving assistance system 12 using optical flow information. The cameras 14, 16, 18 can be any suitable type of camera 14, 16, 18, which can be mounted at any location of the vehicle 10. The processing device 20 can be any type of processing device 20 for processing digital information, e.g. a control unit. The processing device 20 can be shared by different systems of the vehicle 10.

Each of the cameras 14, 16, 18 provides subsequent frames 40, 42. The processing device 20 receives the frames 40, 42 from each of the cameras 14, 16, 18 via the communication bus 22.

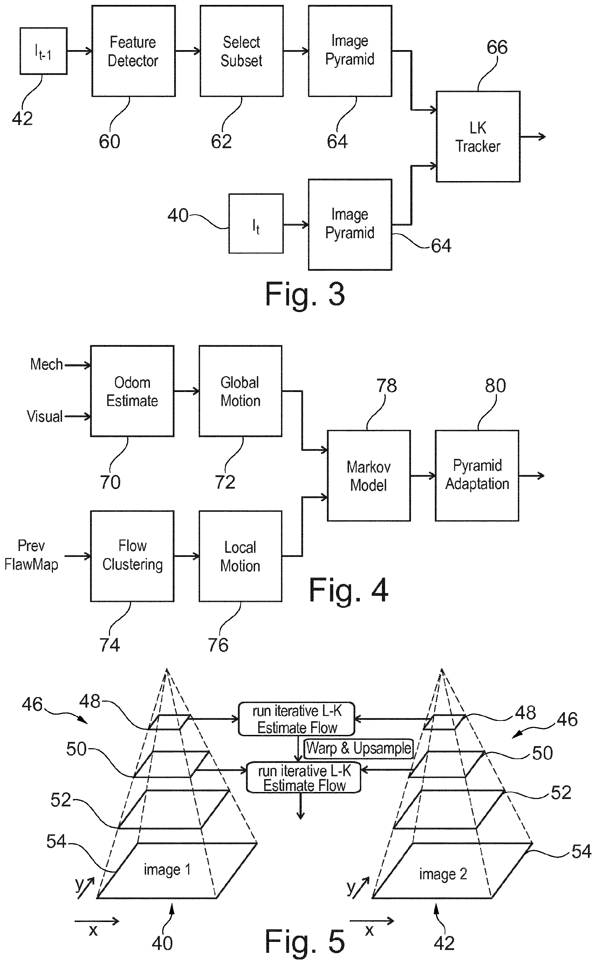

Subsequently, a method for performing optical flow estimation according to the first embodiment will be described with reference to figure 2. The method is performed using the vehicle 10 of the first embodiment with the driving assistance system 12 of the first embodiment. Further reference is made to figures 3 to 7.

The method uses frames 40, which are provided by the cameras 14, 16, 18. The frames 40, 42 refer to optical images as provided by each of the cameras 14, 16, 18 in any suitable format, resolution and number of pixels. In the first embodiment, the frames 40, 42 are provided in multicolor. For the purpose of feature tracking, the frames 40, 42 are distinguished to be a current frame 40 or a previous frame 42, which has been processed prior to the current frame 40.

The method starts in step S100, which refers to performing a detection of features 44 within previous frame 42. Hence, corners or other high textured points are detected as features 44 using Harris algorithm in this embodiment. Furthermore, a selection of a subset of features 44 out of the recognized features 44 is performed to select "good" features 44, which have a high confidence for being a feature 44, are selected using a Harris Score. The step S100 is represented in the block diagram of Fig. 3 by a feature detector block 60 and a feature subset selection block 62.

Step S110 refers to performing a dynamic adaption of an image pyramid 46 in respect to a number of pyramid layers 48, 50, 52, 54. The image pyramid 46 is shown in Fig. 5 for the current frame 40 and the previous frame 42 by way of example having four pyramid layers 48, 50, 52, 54, which are arranged as first pyramid layer 48, second pyramid layer 50, third pyramid layer 52, and fourth pyramid layer 54 from a top of the image pyramid 46 to its bottom. The dynamic adaption of the number of layers 48, 50, 52, 54 of the image pyramid 46 is shown in Fig. 4.

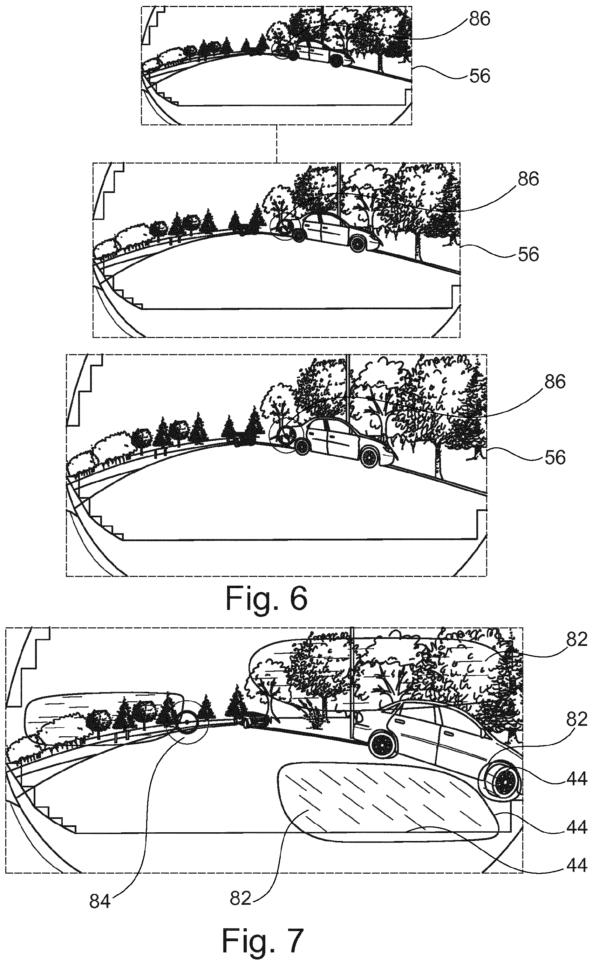

The image pyramid 46 comprises different representations 56 of the current and the previous frame 40, 42 as captured by the cameras 14, 16, 18. The different representations 56 of the frames 40, 42 are arranged in the different layers 48, 50, 52, 54, whereby the first layer 48 is an upper layer in the image pyramid 46. Different representations 56 of the frames 40, 42 can be seen by way of example in Fig. 6.

The dynamic adaption of the image pyramid 46 comprises performing a dynamic adaption of the number of pyramid layers 48, 50, 52, 54 based on a movement speed of the camera 14, 16, 18 for six individual movements, a position and/or a view direction 26, 30 of the camera 14, 16, 18 in particular in respect to a preferred movement direction 32 of the vehicle 10, to which the camera 14,16, 18 is attached, and a distance of features 44 from the camera 14,16, 18. The six movements of the camera 14, 16, 18 refer to a displacement in any coordinate axis and a rotation around any coordinate axis, resulting overall in a number of six degrees of freedom for movement.

In general, the faster a feature 44 moves relative to the camera 14, 16, 18, the more pyramid layers 48, 50, 52, 54 are required. The closer an object, on which a feature 44 is defined, is located relative to the vehicle 10, or when the object is larger than the displacement, the more pyramid layers 48, 50, 52, 54 are required.

Furthermore, when considering a movement of the vehicle 10 along its movement direction 32, this movement is typically a lineal movement, or can be approximated as a lineal movement. Optical flow is different for different positions and view directions 26, 30 of the cameras 14, 16, 18 mounted on the vehicle 10 due to different constraints on the expected optical flow. Hence, when the vehicle 10 moves along the movement direction 32, optical flow will be different for the front view camera 14 compared to the mirror view camera 18. Hence, for the mirror view camera 18, more pyramid layers 48, 50, 52, 54 are required than for the front camera 14.

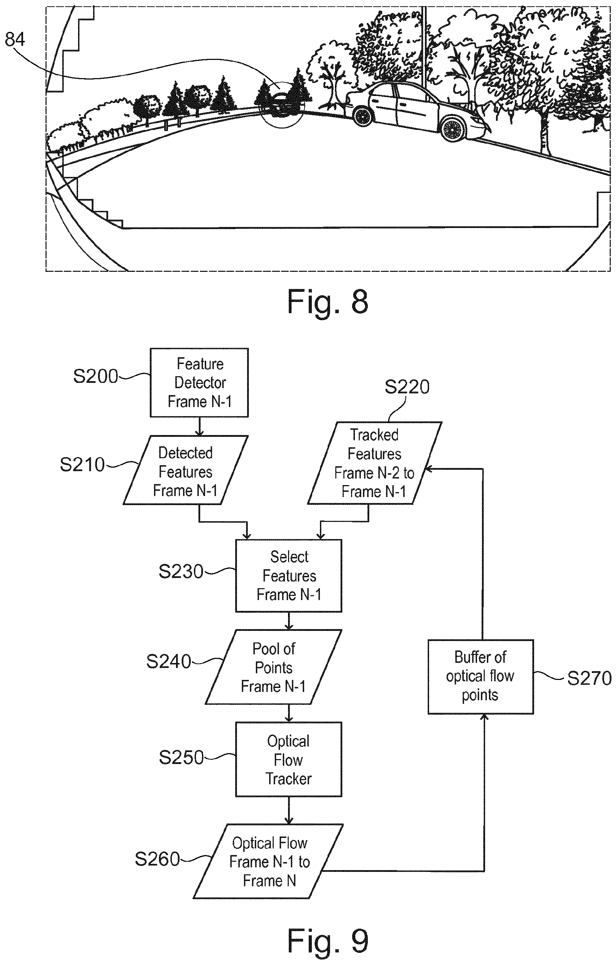

The movement speed of the camera 14, 16, 18 is determined based on a combination of odometry information and camera-based movement speed detection. The odometry information refers to information gathered by the vehicle 10 in respect to its movement, including wheel movement, steering angle, or others. The camera-based motion detection is performed by comparison of a sequence of frames 40, 42, whereby a displacement of an entire scene or parts thereof indicates a movement of the vehicle 10. A frame 40, 42 with odometry information can be seen by way of example in Fig. 8, whereby a movement of the camera 14, 16, 18 is indicated by movement circle 84 in Fig. 8.

The details of the dynamic model adaptation of the pyramid model 46 can be seen in Fig. 4. Accordingly, in odometry estimation block 70, the odometry information gathered by the vehicle 10 in respect to its movement and the camera-based motion detection is combined to determine a movement of the vehicle 10. Accordingly, in global motion detection block 72, the global motion between the previous frame 42 and the current frame 40 is determined. Movement of the camera 14, 16, 18 is indicated by the movement circle 84 in Fig. 6.

Furthermore, based on a previous flow map, flow clustering is performed in flow clustering block 74. Respective clusters 82 are shown in Fig. 7. These clusters 82 are used as basis for determining a local motion in local motion detection block 76.

In Markov Model block 78, modeling of an image pyramid predication is performed. The model of the image pyramid predication is created combining a global model for the entire frame 40, 42 and a local model for the clusters 82 of similar motion. The local model and the global model are combined using a Markov random model. As discussed above, the model is based on a behavior of the object, which can be closer to the camera 14, 16, 18, further away from camera 14, 16, 18, a displacement of the object, a size of the object, a motion of either object or vehicle 10 or both, and others, based on which the number of pyramid layers can vary.

Both models are fused to form a temporally consistent adaptation of the number of pyramid layers 48, 50, 52, 54, which can be seen in Fig. 4, which is performed in pyramid adaptation block 80.

The step of performing a dynamic adaption of a number of pyramid layers 48, 50, 52, 54 of the image pyramid 46 is performed every frame 40, 42.

According to step S120, the image pyramid 46 with representations 56 of different resolutions images of the previous frame 42 and the current frame 40 is provided. This comprises generating the image pyramid 46 with asymmetric down-sampling with a higher resolution in a horizontal direction x than in a vertical direction y. The individual representations 56 of the current frame 40 and the previous frame 42 are provided as discussed above. Step S120 is performed in image pyramid generation block 64, as can be seen in Fig. 3

When providing the image pyramid 46, features 44 detected in a coarse pyramid layer 48, 50, 52, 54 are interpolated to a lower pyramid layer 48, 50, 52, 54 with a higher resolution using bilinear interpolations.

Step S130 refers to performing feature tracking between the previous frame 42 and the current frame 40 through the image pyramid 46. Also feature tracking is represented by Lucas Kanade tracking block 66 in Fig. 3.

When performing feature tracking between the previous frame 42 and the current frame 40, features 44 are initially identified in the first pyramid layer 48. If a feature 44 can be tracked within the first pyramid layer 48, tracking of an individual feature 44 is finalized, and further features 44 are tracked in the same way. If the feature 44 cannot be tracked within the first pyramid layer 48, the method moves from the first pyramid layer 48 to the second pyramid layer 50.

Hence, the second pyramid layer 50 with a representation of the frame 40, 42 with an increased resolution is considered. If a feature 44 can be tracked within the second pyramid layer 50, tracking of an individual feature 44 is finalized. If the feature 44 cannot be tracked within the second pyramid layer 50, the method moves from the second pyramid layer 50 to the next, subsequent pyramid layer 48, 50, 52, 54, until the feature 44 can be tracked.

Each time, when changing to a lower pyramid layer 48, 50, 52, 54, a warp step is performed. Warp refers to reduction of frame movement between subsequent frames 40, 42.

According to step S140 and calculating the optical flow between the previous frame and the current frame for the tracked features based on the image pyramid. The calculation of the optical flow is performed using a Lucas Kanade feature tracker, which is also represented by Lucas Kanade tracking block 66 in Fig. 3.

The Lucas Kanade tracking block 66 provides the optical flow as output of the method. The optical flow can be seen in Fig. 7 as the different length and direction of individual flow vectors.

Fig. 9 shows a flow chart of a generic optical flow algorithm according to a second embodiment. The general principles of the optical flow algorithm of the first embodiment also apply to the optical flow algorithm according to the second embodiment.

According to Fig. 9, a previous frame 42 is provided in step S200. Features 44 are detected in the previous frame 42 in step S210. In steps S230, features 44 from the detected features of step S210 are selected. The selection of the features 44 is performed under consideration of previously tracked features 44, i.e. features 44 tracked between a frame previous to the previous frame 42 and the previous frame 42, as provided from step S220.

In step S240, a pool of features 44 is provided, and in steps S250, an optical flow tracker is performed. Accordingly, in step S260, an optical flow between the previous frame 42 and the current frame 40 is determined. Individual optical flow points are buffered in step S270 as a basis for a subsequent execution of step S220.

### Reference signs list

- 10: vehicle
- 12: driving assistance system
- 14: front camera, camera
- 16: rear camera, camera
- 18: mirror camera, camera
- 20: processing device
- 22: communication bus
- 24: front
- 26: frontal view direction
- 28: rear
- 30: rear view direction
- 32: movement direction
- 40: current frame
- 42: previous frame
- 44: feature
- 46: image pyramid
- 48: first pyramid layer
- 50: second pyramid layer
- 52: third pyramid layer
- 54: fourth pyramid layer
- 56: representation
- 60: feature detector block
- 62: feature subset selection block
- 64: image pyramid generation block
- 66: Lucas Kanade tracking block
- 70: odometry estimation block
- 72: global motion detection block
- 74: flow clustering block
- 76: local motion detection block
- 78: Markov Model block
- 80: pyramid adaptation block
- 82: cluster
- 84: movement circle
- x: horizontal direction
- y: vertical direction

## Claims

1. Method for performing optical flow estimation, comprising the steps of performing a detection of features (44) within a previous frame (42),
providing an image pyramid (46) with representations (56) of different resolutions images of the previous frame (42) and a current frame (40),
performing feature tracking between the previous frame (42) and the current frame (40) through the image pyramid (46), and
calculating the optical flow between the previous frame (42) and the current frame (40) for the tracked features (44) based on the image pyramid (46),
the method comprises a step of performing a dynamic adaption of a number of pyramid layers (48, 50, 52, 54) of the image pyramid (46),
**characterized in that**
the step of performing a dynamic adaptation of a number of pyramid layers (48, 50, 52, 54) of the image pyramid (46) comprises performing a dynamic adaptation of the number of pyramid layers (48, 50, 52, 54) based on a movement speed of a camera (14, 16, 18), which generates the frames (40, 42).

2. Method according to claim 1, **characterized in that** the method comprises a step of determining the movement speed of the camera (14, 16, 18) based on odometry information and/or using camera-based movement speed detection.

3. Method according to any of preceding claims 1 or 2, **characterized in that** step of determining the movement speed of the camera (14, 16, 18) comprises determining a movement speed for up to six individual movements of the camera (14, 16, 18).

4. Method according to any of preceding claims 1 to 3, **characterized in that** the step of performing a dynamic adaption of a number of pyramid layers (48, 50, 52, 54) of the image pyramid (46) comprises performing a dynamic adaption of the number of pyramid layers (48, 50, 52, 54) based on a position and/or a view direction of the of a camera (14, 16, 18), which generates the frames (40, 42), in particular in respect to a preferred movement direction (32) of a vehicle (10), to which the camera (14, 16, 18) is attached.

5. Method according to any preceding claim, **characterized in that** the step of performing a dynamic adaption of a number of pyramid layers (48, 50, 52, 54) of the image pyramid (46) comprises performing a dynamic adaption of the number of pyramid layers (48, 50, 52, 54) based on a distance of features (44) from a camera (14, 16, 18), which generates the frames (40, 42).

6. Method according to any preceding claim, **characterized in that** the step of performing a dynamic adaption of a number of pyramid layers (48, 50, 52, 54) of the image pyramid (46) is performed with a minimum rate of a given number of frames (40, 42), preferably at least every twenty frames (40, 42), further preferred at least every ten frames (40, 42), still further preferred at least every five frames (40, 42), and even further preferred every frame (40, 42).

7. Method according to any preceding claim, **characterized in that** the step of providing an image pyramid (46) with representations (56) of different resolution images of the previous frame (42) and a current frame (40) comprises generating an image pyramid (46) with asymmetric down-sampling with a higher resolution in a horizontal direction (x) than in a vertical direction (y).

8. Method according to any preceding claim, **characterized in that** the method comprises an additional step of modeling an image pyramid predication prior to the step of providing an image pyramid (46) with representations (56) of different resolutions images of the previous frame (42) and a current frame (40).

9. Method according to claim 8, **characterized in that** the step of modeling an image pyramid predication comprises combining a global model for the entire frame (40, 42) and a local model for at least one cluster () of similar motion.

10. Method according to any of preceding claims 8 or 9, **characterized in that** the step of modeling a pyramid predication comprises using a Markov random model.

11. Method according to any preceding claim, **characterized in that** the step of providing an image pyramid (46) with representations (56) of different resolutions images of the previous frame (42) and a current frame (40) comprises interpolating features (44) detected in a coarse pyramid layer (48, 50, 52, 54) to a lower pyramid layer (48, 50, 52, 54) with a higher resolution.

12. Method according to claim 11, **characterized in that** the step of interpolating features (44) detected in a coarse pyramid layer (48, 50, 52, 54) to a lower pyramid layer (48, 50, 52, 54) with a higher resolution comprises using bilinear interpolations.

13. Driving assistance system (12) comprising a camera (14, 16, 18) and a processing device (20), whereby the camera (14, 16, 18) provides subsequent frames and the processing device (20) is adapted to perform the method according to any preceding claim using the frames provided from the camera (14, 16, 18).

14. Vehicle (10) comprising a driving assistance system (12) according preceding claim 13.

## Patentansprüche

1. Verfahren zum Durchführen einer optischen Flussschätzung, umfassend die Schritte
Durchführen einer Detektion von Merkmalen (44) innerhalb eines vorangehenden Frames (42),
Bereitstellen einer Bildpyramide (46) mit Darstellungen (56) von Bildern unterschiedlicher Auflösungen des vorangehenden Frames (42) und eines aktuellen Frames (40), Durchführen einer Merkmalsnachverfolgung zwischen dem vorangehenden Frame (42) und dem aktuellen Frame (40) durch die Bildpyramide (46), und
Berechnen des optischen Flusses zwischen dem vorangehenden Frame (42) und dem aktuellen Frame (40) für die nachverfolgten Merkmale (44) basierend auf der Bildpyramide (46),
wobei das Verfahren einen Schritt eines Durchführens einer dynamischen Adaption einer Anzahl von Pyramidenebenen (48, 50, 52, 54) der Bildpyramide (46) umfasst,
**dadurch gekennzeichnet, dass**
der Schritt eines Durchführens einer dynamischen Adaption einer Anzahl von Pyramidenebenen (48, 50, 52, 54) der Bildpyramide (46) Durchführen einer dynamischen Adaption der Anzahl von Pyramidenebenen (48, 50, 52, 54) basierend auf einer Bewegungsgeschwindigkeit einer Kamera (14, 16, 18), die die Frames (40, 42) erzeugt, umfasst.

2. Verfahren nach Anspruch 1, **dadurch gekennzeichnet, dass**
das Verfahren einen Schritt eines Bestimmens der Bewegungsgeschwindigkeit der Kamera (14, 16, 18) basierend auf Odometrieinformation und/oder unter Verwendung einer kamerabasierten Bewegungsgeschwindigkeitsdetektion umfasst.

3. Verfahren nach einem der vorangehenden Ansprüche 1 oder 2, **dadurch gekennzeichnet, dass**
der Schritt eines Bestimmens der Bewegungsgeschwindigkeit der Kamera (14, 16, 18) Bestimmen einer Bewegungsgeschwindigkeit für bis zu sechs Einzelbewegungen der Kamera (14, 16, 18) umfasst.

4. Verfahren nach einem der vorangehenden Ansprüche 1 bis 3, **dadurch gekennzeichnet, dass**
der Schritt eines Durchführens einer dynamischen Adaption einer Anzahl von Pyramidenebenen (48, 50, 52, 54) der Bildpyramide (46) Durchführen einer dynamischen Adaption der Anzahl von Pyramidenebenen (48, 50, 52, 54) basierend auf einer Position und/oder einer Blickrichtung der einer Kamera (14, 16, 18) umfasst, die die Frames (40, 42) erzeugt, insbesondere in Bezug auf eine bevorzugte Bewegungsrichtung (32) eines Fahrzeugs (10), an dem die Kamera (14, 16, 18) befestigt ist.

5. Verfahren nach einem der vorangehenden Ansprüche, **dadurch gekennzeichnet, dass**
der Schritt eines Durchführens einer dynamischen Adaption einer Anzahl von Pyramidenebenen (48, 50, 52, 54) der Bildpyramide (46) Durchführen einer dynamischen Adaption der Anzahl von Pyramidenebenen (48, 50, 52, 54) basierend auf einem Abstand von Merkmalen (44) von einer Kamera (14, 16, 18), die die Frames (40, 42) erzeugt, umfasst.

6. Verfahren nach einem der vorangehenden Ansprüche, **dadurch gekennzeichnet, dass**
der Schritt eines Durchführens einer dynamischen Adaption einer Anzahl von Pyramidenebenen (48, 50, 52, 54) der Bildpyramide (46) mit einer Mindestrate einer vorgegebenen Anzahl von Frames (40, 42), vorzugsweise mindestens alle zwanzig Frames (40, 42), weiter bevorzugt mindestens alle zehn Frames (40, 42), noch weiter bevorzugt mindestens alle fünf Frames (40, 42) und sogar noch weiter bevorzugt bei jedem Frame (40, 42) durchgeführt wird.

7. Verfahren nach einem der vorangehenden Ansprüche, **dadurch gekennzeichnet, dass**
der Schritt eines Bereitstellens einer Bildpyramide (46) mit Darstellungen (56) von Bildern unterschiedlicher Auflösungen des vorangehenden Frames (42) und eines aktuellen Frames (40) Erzeugen einer Bildpyramide (46) mit asymmetrischem Downsampling mit einer höheren Auflösung in einer horizontalen Richtung (x) als in einer vertikalen Richtung (y) umfasst.

8. Verfahren nach einem der vorangehenden Ansprüche, **dadurch gekennzeichnet, dass**
das Verfahren einen zusätzlichen Schritt eines Modellierens einer Bildpyramidenprädikation vor dem Schritt eines Bereitstellens einer Bildpyramide (46) mit Darstellungen (56) von Bildern unterschiedlicher Auflösungen des vorangehenden Frames (42) und eines aktuellen Frames (40) umfasst.

9. Verfahren nach Anspruch 8, **dadurch gekennzeichnet, dass**
der Schritt eines Modellierens einer Bildpyramidenprädikation Kombinieren eines globalen Modells für den gesamten Frame (40, 42) und eines lokalen Modells für mindestens ein Cluster () einer ähnlichen Bewegung umfasst.

10. Verfahren nach einem der vorangehenden Ansprüche 8 oder 9, **dadurch gekennzeichnet, dass**
der Schritt eines Modellierens einer Pyramidenprädikation Verwenden eines Markov-Zufallsmodells umfasst.

11. Verfahren nach einem der vorangehenden Ansprüche, **dadurch gekennzeichnet, dass**
der Schritt eines Bereitstellens einer Bildpyramide (46) mit Darstellungen (56) von Bildern unterschiedlicher Auflösungen des vorangehenden Frames (42) und eines aktuellen Frames (40) Interpolieren von Merkmalen (44), die in einer groben Pyramidenebene (48, 50, 52, 54) detektiert werden, in eine tiefere Pyramidenebene (48, 50, 52, 54) mit einer höheren Auflösung umfasst.

12. Verfahren nach Anspruch 11, **dadurch gekennzeichnet, dass**
der Schritt eines Interpolierens von Merkmalen (44), die in einer groben Pyramidenebene (48, 50, 52, 54) detektiert werden, in eine tiefere Pyramidenebene (48, 50, 52, 54) mit einer höheren Auflösung Verwenden von bilinearen Interpolationen umfasst.

13. Fahrassistenzsystem (12), umfassend eine Kamera (14, 16, 18) und eine Verarbeitungseinrichtung (20), wobei die Kamera (14, 16, 18) aufeinanderfolgende Frames bereitstellt und die Verarbeitungseinrichtung (20) eingerichtet ist, das Verfahren nach einem der vorangehenden Ansprüche unter Verwendung der durch die Kamera (14, 16, 18) bereitgestellten Frames durchzuführen.

14. Fahrzeug (10), umfassend ein Fahrassistenzsystem (12) nach dem vorangehenden Anspruch 13.

## Revendications

1. Procédé de réalisation d'une estimation de flux optique, comprenant les étapes de
réalisation d'une détection de caractéristiques (44) au sein d'une prise de vue précédente (42),
fourniture d'une pyramide d'images (46) comportant des représentations (56) d'images de résolutions différentes de la prise de vue précédente (42) et d'une prise de vue actuelle (40),
réalisation d'un suivi de caractéristiques entre la prise de vue précédente (42) et la prise de vue actuelle (40) au moyen de la pyramide d'images (46), et
calcul du flux optique entre la prise de vue précédente (42) et la prise de vue actuelle (40) pour les caractéristiques suivies (44) en fonction de la pyramide d'images (46),
le procédé comprenant une étape de réalisation d'une adaptation dynamique d'un nombre de couches de pyramide (48, 50, 52, 54) de la pyramide d'images (46), **caractérisé en ce que**
l'étape de réalisation d'une adaptation dynamique d'un nombre de couches de pyramide (48, 50, 52, 54) de la pyramide d'images (46) comprend la réalisation d'une adaptation dynamique du nombre de couches de pyramide (48, 50, 52, 54) en fonction d'une vitesse de mouvement d'une caméra (14, 16, 18) qui génère les prises de vue (40, 42) .

2. Procédé selon la revendication 1, le procédé étant **caractérisé en ce qu'**il comprend une étape de détermination de la vitesse de mouvement de la caméra (14, 16, 18) en fonction d'informations odométriques et/ou à l'aide d'une détection de vitesse de mouvement basée sur la caméra.

3. Procédé selon l'une quelconque des revendications 1 ou 2 précédentes, **caractérisé en ce que** l'étape de détermination de la vitesse de mouvement de la caméra (14, 16, 18) comprend la détermination d'une vitesse de mouvement pour jusqu'à six mouvements individuels de la caméra (14, 16, 18).

4. Procédé selon l'une quelconque des revendications 1 à 3 précédentes, **caractérisé en ce que** l'étape de réalisation d'une adaptation dynamique d'un nombre de couches de pyramide (48, 50, 52, 54) de la pyramide d'images (46) comprend la réalisation d'une adaptation dynamique du nombre de couches de pyramide (48, 50, 52, 54) en fonction d'une position et/ou d'une direction de vue de la d'une caméra (14, 16, 18) qui génère les prises de vue (40, 42), plus particulièrement par rapport une direction de mouvement préférée (32) d'un véhicule (10) auquel la caméra (14, 16, 18) est fixée.

5. Procédé selon l'une quelconque des revendications précédentes, **caractérisé en ce que** l'étape de réalisation d'une adaptation dynamique d'un nombre de couches de pyramide (48, 50, 52, 54) de la pyramide d'images (46) comprend la réalisation d'une adaptation dynamique du nombre de couches de pyramide (48, 50, 52, 54) en fonction d'une distance de caractéristiques (44) depuis une caméra (14, 16, 18) qui génère les prises de vue (40, 42).

6. Procédé selon l'une quelconque des revendications précédentes, **caractérisé en ce que** l'étape de réalisation d'une adaptation dynamique d'un nombre de couches de pyramide (48, 50, 52, 54) de la pyramide d'images (46) est réalisée avec une cadence minimale d'un nombre donné de prises de vue (40, 42), de préférence au moins toutes les vingt prises de vue (40, 42), encore de préférence au moins toutes les dix prises de vue (40, 42), toujours encore de préférence au moins toutes les cinq prises de vue (40, 42), voire encore de préférence toutes les prises de vue (40, 42).

7. Procédé selon l'une quelconque des revendications précédentes, **caractérisé en ce que** l'étape de fourniture d'une pyramide d'images (46) comportant des représentations (56) d'images de résolutions différentes de la prise de vue précédente (42) et d'une prise de vue actuelle (40) comprend la génération d'une pyramide d'images (46) au moyen d'un sous-échantillonnage asymétrique avec une résolution plus élevée dans une direction horizontale (x) que dans une direction verticale (y).

8. Procédé selon l'une quelconque des revendications précédentes, le procédé étant **caractérisé en ce qu'**il comprend une étape additionnelle de modélisation d'une prédiction de pyramide d'images préalablement à l'étape de fourniture d'une pyramide d'images (46) comportant des représentations (56) d'images de résolutions différentes de la prise de vue précédente (42) et d'une prise de vue actuelle (40).

9. Procédé selon la revendication 8, **caractérisé en ce que** l'étape de modélisation d'une prédiction de pyramide d'images comprend la combinaison d'un modèle global pour la prise de vue tout entière (40, 42) et d'un modèle local pour au moins une grappe () de mouvement similaire.

10. Procédé selon l'une quelconque des revendications 8 ou 9 précédentes, **caractérisé en ce que** l'étape de modélisation d'une prédiction de pyramide comprend l'utilisation d'un modèle de Markov aléatoire.

11. Procédé selon l'une quelconque des revendications précédentes, **caractérisé en ce que** l'étape de fourniture d'une pyramide d'images (46) comportant des représentations (56) d'images de résolutions différentes de la prise de vue précédente (42) et d'une prise de vue actuelle (40) comprend l'interpolation de caractéristiques (44) détectées dans une couche de pyramide grossière (48, 50, 52, 54) sur une couche de pyramide inférieure (48, 50, 52, 54) d'une résolution plus élevée.

12. Procédé selon la revendication 11, **caractérisé en ce que** l'étape d'interpolation de caractéristiques (44) détectées dans une couche de pyramide grossière (48, 50, 52, 54) sur une couche de pyramide inférieure (48, 50, 52, 54) d'une résolution plus élevée comprend l'utilisation d'interpolations bilinéaires.

13. Système d'aide à la conduite (12) comprenant une caméra (14, 16, 18) et un dispositif de traitement (20), la caméra (14, 16, 18) fournissant des prises de vue successives et le dispositif de traitement (20) étant adapté à réaliser le procédé selon l'une quelconque des revendications précédentes en utilisant les prises de vue fournies depuis la caméra (14, 16, 18).

14. Véhicule (10) comprenant un système d'aide à la conduite (12) selon la revendication 13 précédente.
